# DEMANDE DE BREVET EUROPEEN

(11) **EP 2 072 607 A1**
(43) Date de publication de la demande: **24.06.2009**
(21) Numéro de dépôt: 08291014.2
(22) Date de dépôt: 29.10.2008
(51) Int. Cl.: C10G 45/08, C10G 65/04, B01J 23/85, B01J 23/883, B01J 27/19, B01J 27/185

(54) **Procédé de désulfuration en deux étapes d'essences oléfiniques comprenant de l'arsenic**

(30) Priorité: 19.11.2007 FR 0708155
(71) Demandeur: IFP, 92852 Rueil-Malmaison Cédex (FR)
(72) Inventeur: Picard, Florent, 69360 Communay (FR); Coupard, Vincent, 69120 Vaulx-en-Velin (FR); Devers, Elodie, 69008 Lyon (FR)

(57) **Abrégé**

L'invention concerne un procédé en lit fixe de captation de l'arsenic et de désulfuration d'une fraction hydrocarbonée comprenant des oléfines, du soufre et de l'arsenic, ledit procédé comprenant une étape a) de mise en contact en présence d'hydrogène d'une masse de captation avec ladite fraction hydrocarbonée, le rapport entre le débit d'hydrogène et le débit de la fraction hydrocarbonée étant compris entre 50 et 800 Nm³/m³, la température opératoire étant comprise entre 200 °C et 400 °C, la pression opératoire étant comprise entre 0,2 et 5 MPa. La masse de captation comprend du molybdène sous forme sulfuré, du nickel sous forme sulfuré et au moins un support poreux sélectionné dans le groupe constitué par les alumines, la silice, les silices alumines, l'oxyde de titane et l'oxyde de magnésium. La teneur en Nickel est comprise entre 10 et 28% poids et la teneur en Molybdène est comprise entre 0,3 et 2,1 % poids.

## Description

### Domaine de l'invention :

La production d'essences peu soufrées nécessite un procédé d'hydrodésulfuration comprenant classiquement des mises en contact des composés soufrés contenus dans les essences avec un gaz riche en hydrogène. L'indice d'octane de telles essences est très fortement lié à leur teneur en oléfines. Afin de préserver l'indice d'octane des essences, il s'agit de limiter les réactions d'hydrogénation des oléfines. Des procédés d'hydrodésulfuration sélective des essences oléfiniques ont ainsi été développés dans les années 1990 pour permettre aux raffineurs de respecter les futures normes sur les carburants.

Dans ces procédés, afin de maintenir les taux de conversion des composés soufrés élevés, les catalyseurs usagés sont régulièrement remplacés par des catalyseurs frais. La désactivation des catalyseurs d'hydrotraitement est le plus souvent liée à la présence d'impuretés présentes dans les essences traitées. Ainsi, la présence de métaux lourds tels que le mercure ou l'arsenic, ou de contaminants tels que le silicium sous forme d'organométalliques dans les essences entraîne une désactivation rapide des catalyseurs d'hydrotraitement.

Différentes solutions ont été proposées pour extraire l'arsenic présent dans des essences comprenant des oléfines et des composés soufrés. Toutefois, aucune de ces solutions n'est adaptée à la captation de l'arsenic de ces essences et à la désulfuration de ces essences, tout en limitant les réactions d'hydrogénation.

### Art antérieur :

Le brevet US 6,759,364 décrit un catalyseur adapté à la captation d'arsenic dans des coupes naphta ou distillat issues de la distillation de pétroles bruts, contenant du nickel, du molybdène et du phosphore. Les teneurs en nickel et en molybdène sont supérieures à 8% poids, et la teneur en phosphore est comprise entre 0,1 et 3 % poids. La solution présentée dans le cadre de la présente invention diffère de celle présentée dans le brevet US 6,759, 364, notamment par le fait que la teneur en élément du groupe VIB est comprise entre 0,3 et 2,1 % poids.

La demande de brevet US 2003111391 décrit un catalyseur adapté à la captation d'arsenic dans des coupes hydrocarbonées comprenant un support réfractaire, au moins 8% poids d'élément du groupe VIB choisi parmi le molybdène et le tungstène et une quantité d'élément du groupe VIII choisi parmi le Nickel et le Cobalt tels que le rapport molaire entre l'élément du groupe VIII et l'élément du groupe VIB est compris entre 1,5 et 2,5. La solution présentée dans le cadre de la présente invention diffère de celle présentée dans cette demande de brevet notamment par le fait que la teneur en élément du groupe VIB est comprise entre 0,3 et 2,1 % poids.

### Résumé de l'invention

L'invention concerne un procédé en lit fixe de captation de l'arsenic et de désulfuration d'une fraction hydrocarbonée comprenant des oléfines, du soufre et de l'arsenic, ledit procédé comprenant une étape a) de mise en contact en présence d'hydrogène d'une masse de captation avec ladite fraction hydrocarbonée, le rapport entre le débit d'hydrogène et le débit de la fraction hydrocarbonée étant compris entre 50 et 800 Nm³/m³, la température opératoire étant comprise entre 200 °C et 400 °C, la pression opératoire étant comprise entre 0,2 et 5 MPa. La masse de captation comprend du molybdène sous forme sulfuré, du nickel sous forme sulfuré et au moins un support poreux sélectionné dans le groupe constitué par les alumines, la silice, les silices alumines, l'oxyde de titane et l'oxyde de magnésium. La teneur en Nickel est comprise entre 10 et 28% poids et la teneur en Molybdène est comprise entre 0,3 et 2,1 % poids.

### Description détaillée de l'invention

Le but est d'obtenir un bon compromis entre l'activité en hydrodésulfuration, la sélectivité en HDS/ HDO (hydrodésulfuration/hydrogénation des oléfines) et la captation de l'arsenic sur la masse de captation.

L'invention concerne un procédé en lit fixe de captation de l'arsenic et de désulfuration d'une fraction hydrocarbonée comprenant des oléfines, du soufre et de l'arsenic. Le procédé comprend une étape a) de mise en contact en présence d'hydrogène d'une masse de captation avec ladite fraction hydrocarbonée. Le rapport entre le débit d'hydrogène et le débit de la fraction hydrocarbonée est compris entre 50 et 800 Nm³/m³, de préférence entre 100 et 600 Nm³/m³, et de manière encore préférée entre 200 et 400 Nm³/m³ . La température opératoire est comprise entre 200 °C et 400 °C, et de manière préférée comprise entre 240 et 350°C. La pression opératoire est comprise entre 0,2 et 5 MPa, de préférence entre 0,5 MPa et 3 MPa.

La masse de captation comprend:
- du molybdène sous forme sulfuré et du nickel sous forme sulfuré.
- au moins un support poreux sélectionné dans le groupe constitué par les alumines, la silice, les silice-alumines, l'oxyde de titane, l'oxyde de magnésium, de façon préférée par les alumine et les silice-alumines.

La teneur en Nickel est comprise entre 10 et 28% poids, exprimé en % d'oxyde de Nickel sur la masse de captation avant sulfuration. La teneur en Molybdène est comprise entre 0,3 et 2,1% poids exprimé en % d'oxyde de Molybdène sur la masse de captation avant sulfuration.

### Étape a)

Les valeurs données en ppm ou ppb dans cette description sont des ppm et ppb exprimés en poids et 1000 ppb = 1 ppm.

Les mono-oléfines, habituellement appelées alcènes, désignent des molécules hydrocarbonées présentant une seule double liaison.

L'invention s'applique de préférence au traitement des coupes essences de craquage issues d'unités de craquage catalytique, de craquage thermique ou de vapocraquage. Les essences sont généralement des coupes hydrocarbonées dont la gamme de points d'ébullition s'étend des points d'ébullition des hydrocarbures à 5 atomes de carbone jusqu'à environ 250°C.
L'invention s'applique également au traitement des mélanges d'essences de distillation directe qui peuvent contenir des métaux lourds issus du brut, avec des essences de craquage contenant des oléfines.
De façon préférée, la fraction hydrocarbonée est une essence de craquage catalytique contenant entre 5% et 60% poids d'oléfines, entre 50 ppm et 6000 ppm poids de soufre et entre 10 ppb et 1000 ppb poids d'arsenic.

Dans le cadre de la présente invention, le taux d'hydrogénation des oléfines au cours de l'étape a) de captation est inférieur à 50 % , préférentiellement inférieur à 30 %, et de manière encore préférée inférieur à 20 %.

Pour être active en captation des composés arséniés, la masse de captation doit généralement être mise en oeuvre dans des conditions opératoires telles que la vitesse de captation de l'arsenic soit maximisée, tout en limitant la vitesse d'hydrogénation des oléfines.

L'hydrogène utilisé peut être issu de toute source d'hydrogène. De préférence on utilise de l'hydrogène frais issu de la raffinerie et/ou de l'hydrogène recyclé d'une unité d'hydrodésulfuration, de préférence de l'unité d'hydrodésulfuration de la coupe hydrocarbonée à purifier.

La température d'opération des réacteurs est généralement comprise entre 200°C et 400°C, de préférence entre 240°C et 350°C, et de façon encore préférée entre 260°C et 340°C.

La pression est généralement comprise entre 0,2 MPa et 5 MPa et préférentiellement comprise entre 0,5 MPa et 3 MPa

La quantité de masse de captation à mettre en oeuvre est généralement calculée en fonction de la teneur en contaminants de la charge, de la durée de vie recherchée ainsi que de la teneur maximale "captable" sur le solide.

La surface spécifique du support est généralement comprise entre 30 m²/gramme et 350 m²/gramme, de préférence entre 60 m²/gramme et 200 m²/gramme, de préférence entre 79 m²/gramme et 140 m²/gramme.

Selon une variante, la masse de captation comprend du phosphore, la teneur en phosphore étant comprise entre 0,1 et 10 % poids, exprimé en % d'oxyde de phosphore sur la masse de captation avant sulfuration.

### Étape b)

L'étape a) est généralement suivit d'une étape b) d'hydrodésulfuration sélective. En effet, l'étape a) permet de transformer une partie des composés soufrés organiques en H₂S. Toutefois lorsque l'effluent de l'étape a) présente une teneur en soufre supérieure à 10 ppm, l'essence débarrassée de l'arsenic est traitée dans cette étape b) d'hydrodésulfuration sélective, afin de produire des essences à faible teneur en soufre répondant aux spécifications actuelles. Lors de l'étape b), l'effluent de l'étape a) est mise en contact avec un catalyseur sélectif d'hydrodésulfuration.

Le catalyseur mis en oeuvre dans l'étape b) est généralement protégé de l'arsenic présent dans la charge par la masse de captation mise en oeuvre dans l'étape a). Ainsi des catalyseurs d'hydrodésulfuration très sélectifs qui sont sensibles à la présence d'arsenic peuvent être mis en oeuvre dans l'étape b).

Tout catalyseur d'hydrodésulfuration peut être utilisé dans l'étape b). Toutefois, on préfère utiliser des catalyseurs présentant une bonne sélectivité vis-à-vis des réactions d'hydrodésulfuration. De tels catalyseurs comprennent généralement au moins un support minéral amorphe et poreux, un métal du groupe VIB, un métal du groupe VIII. Le métal du groupe VIB est généralement le molybdène ou le tungstène et le métal du groupe VIII est généralement le nickel ou le cobalt.

Le support est généralement sélectionné dans le groupe constitué par les alumines, la silice, les silice-alumines, le carbure de silicium, les oxydes de titane seuls ou en mélange avec de l'alumine ou de la silice alumine, les oxydes de magnésium seuls ou en mélange avec de l'alumine ou de la silice alumine. De préférence, le support est sélectionné dans le groupe constitué par les alumines, la silice et les silice-alumines.

Dans le cas ou les étapes a) et b) sont enchaînées, il est avantageux d'opérer les deux étapes dans les mêmes conditions de pression, température et débit d'hydrogène.

Selon une variante, la masse de captation est placée en position de lit de garde du réacteur d'hydrodésulfuration dans lequel à lieu l'étape b).
Selon une autre variante, l'étape a) se déroule dans un réacteur de captation séparé et placé en amont du réacteur d'hydrodésulfuration dans lequel à lieu l'étape b).

Le procédé de préparation de la masse de captation n'est en aucun cas un élément limitatif de la présente invention.
La masse de captation selon l'invention peut être préparée au moyen de toute technique connue de l'homme du métier.
Elle est généralement préparée par la méthode de l'imprégnation à sec qui consiste à dissoudre exactement la quantité d'éléments métalliques désirés sous forme de sels solubles dans le solvant choisi, par exemple l'eau déminéralisée, et à remplir aussi exactement que possible la porosité du support par la solution ainsi préparée.
Le solide ainsi obtenu peut subir une étape de séchage et/ou une étape de calcination et/ou une étape de réduction. Ensuite, il subit en général une étape de sulfuration. De manière préférée, le solide subit une étape de séchage suivie optionnellement d'une étape de calcination.
Généralement, la sulfuration est effectuée au moyen d'un traitement en température de la masse de captation au contact d'hydrogène, et d'un composé organique soufré décomposable et générateur d'H₂S comme le DMDS (diméthyl disulfure), ou directement au contact d'un flux gazeux d'H₂S et d'hydrogène. Cette étape se réalise soit à l'intérieur (in situ) ou à l'extérieur de l'unité réactionnelle (ex situ) à des températures comprises entre 100°C et 600°C, de préférence entre 200°C et 500°C, voire entre 300 et 450 °C.
Selon une variante, la sulfuration de la masse de captation est réalisée pendant la captation des métaux lourds. La masse de captation est alors chargée sous forme d'oxyde et la fraction hydrocarbonée à traiter génère par décomposition partielle des composés soufrés qu'elle renferme, l'H₂S qui permet de sulfurer la masse de captation en transformant les oxydes métalliques en sulfures métalliques.

Le procédé peut être mis en oeuvre dans tout type de réacteur connu de l'homme du métier. La mise en oeuvre facilite l'application du principe et de la masse sans modification des performances intrinsèques, mais juste en optimisant la durée de vie.

### Exemple 1 : Préparation des solides

Dans les exemples qui suivent, la surface spécifique du support est mesurée par la méthode BET (norme ASTM D3663). Le volume poreux est mesuré par porosimétrie au mercure selon la norme ASTM D4284-92 avec un angle de mouillage de 140°.

Les masses de captation selon l'invention sont préparées par imprégnations successives. Le nickel est déposé par une double imprégnation à sec d'une solution aqueuse préparée à partir de nitrate de nickel, le volume de la solution contenant le métal étant égal au volume poreux de la masse de support. Pour la masse de captation A (non conforme), seule cette étape d'imprégnation du nickel est réalisée.

Les supports utilisés sont des alumines de transition présentant une surface spécifique de 135 m²/g et un volume poreux de 1,12 cm³/g.
Les concentrations en précurseurs de la solution aqueuse sont ajustées de manière à déposer sur le support les teneurs pondérales souhaitées.
Le solide est ensuite séché pendant 12 heures à 120°C puis calciné sous air à 500°C pendant 2 heures.

Dans le cas des masses de captation contenant du molybdène (masse B et C), celui-ci est déposé dans une seconde étape par imprégnation à sec d'une solution aqueuse préparée à partir d'heptamolybdate d'ammonium, le volume de la solution contenant le métal étant rigoureusement égal au volume poreux de la masse de support. Les concentrations en précurseurs de la solution aqueuse sont ajustées de manière à déposer sur le support les teneurs pondérales souhaitées. Le solide est ensuite séché pendant 12 heures à 120°C puis calciné sous air à 500°C pendant 2 heures.
Les teneurs en oxydes métalliques des masses de captation sont décrites dans le tableau 1.

Le catalyseur d'hydrodésulfuration sélective (catalyseur D) est un catalyseur d'hydrodésulfuration sélective comprenant 10,3% poids d'oxyde molybdène et 2,9% poids d'oxyde de cobalt. Le support utilisé est une alumine de transition présentant un couple (surface spécifique, volume poreux) de (135 m²/g, 1,12 cm3/g).
Les teneurs en oxydes métalliques de ce catalyseur sont décrites dans le tableau 1.

**Tableau 1: Description des solides**

| **Solide** | **% NiO** | **% MoO₃** | % **CoO** - |
|---|---|---|---|
| Masse de captation A (non conforme) | 18,5 | - | - |
| Masse de captation B (selon l'invention) | 18,2 | 1,8 | - |
| Masse de captation C (non conforme) | 7,7 | 7,4 | - |
| Catalyseur D (référence) | - | 10,3 | 2,9 |

### Exemple 2 : Test en captation de l'arsenic

Le test de captation d'arsenic est réalisé sur des masses de captation chargée en lits fixes successifs à l'intérieur d'un réacteur tubulaire. Nous nous intéressons ici à la masse de captation placée en lit d'attaque (c'est-à-dire sur le premier lit des lits fixes successifs), afin d'étudier sa saturation. Une essence de craquage catalytique (FCC) contenant de l'arsenic et dont les caractéristiques compositionnelles sont rassemblées dans le tableau 2 est injectée de façon à percoler à travers les différents lits chargés dans le réacteur.

**Tableau 2 : Caractéristiques de la coupe essence de FCC.**

| | |
|---|---|
| As ppm | 15 |
| S ppm | 200 |
| Aromatiques %pds | 18,27 |
| Paraffines et Naphténiques (% pds) | 50,76 |
| Oléfines %pds | 30,95 |
| PI °C | 54 |
| PF°C | 168 |

Les conditions opératoires sont les suivantes :
- P= 2,0 MPa,
- H2/charge= 300 Normauxlitres/litres de charge hydrocarbonée,
- VVH = 4 h-1,
- T = 260°C

Les masses de captation sont chargées à l'état présulfuré. L'activation des masses de captation se fait sous hydrogène à 250°C avec un débit de 1,2 Normaux litres d'hydrogène par gramme de catalyseur.
Le suivi de la captation d'arsenic se fait par mesure dans les effluents liquides de la teneur en arsenic. L'analyse de l'arsenic est réalisée par spectrométrie d'absorption atomique (four graphite). Le test se termine lorsque l'arsenic a percé, c'est-à-dire qu'il a été détecté au sens analytique dans les effluents.
Les masses de captation sont alors déchargées. La quantité massique d'arsenic capté par le solide est déterminée par fluorescence X.
Les masses de captation sont préparées selon l'exemple 1. Leurs teneurs massiques en phase active rapportées en oxyde de molybdène et de nickel, ainsi que la quantité d'arsenic captée en pourcentage massique sont données dans le tableau 3.

**Tableau 3 : Caractéristiques des masses de captation et quantité d'arsenic**

| | **%pds NiO** | **%pds MoO3** | **% pds CoO** | **%pds As capté** |
|---|---|---|---|---|
| Masse de captation A (non conforme) | 18,5 | - | - | 12,1 |
| Masse de captation B (selon l'invention) | 18,2 | 2,1 | - | 14,8 |
| Masse de captation C (non conforme) | 7,7 | 7,4 | - | 10,2 |
| Catalyseur D (référence) | - | 10,3 | 2,9 | 2,1 |

La masse de captation B permet de capter 14,8% poids d'arsenic soit plus que les 12,1% poids de la masse de captation A de référence et que les 10,2% poids de la masse de captation C.

### Exemple 4 : Test d'activité et sélectivité

Afin d'évaluer les performances catalytiques en hydrodésulfuration (HDS) et en sélectivité HDS/HDO (hydrodésulfuration/hydrogénation des oléfines), une charge modèle représentative d'une essence de craquage catalytique (FCC) contenant 10 % poids de 2,3-diméthylbut-2-ène et 0,33 % poids de 3-méthylthiophène (soit 1000 ppm de soufre par rapport à la charge) est utilisée. Le solvant utilisé est l'heptane. Les masses de captation sont préalablement sulfurées ex-situ en phase gaz à 500°C pendant 2h sous flux d'H2S dans H2 (15%).
La réaction est réalisée en réacteur fermé de type Grignard sous 3,5 MPa de pression d'hydrogène, à 250°C. Dans ce réacteur ont été introduits la charge décrite ci-dessus et le catalyseur. Des échantillons sont prélevés à différents intervalles de temps et sont analysés par chromatographie en phase gazeuse de façon à observer la disparition des réactifs et l'apparition des produits en conséquence.
L'activité est exprimée en constante de vitesse kHDS de la réaction d'hydrodésulfuration (HDS), normalisée par volume de solide sous forme oxyde, en supposant un ordre 1 par rapport aux composés soufrés. La sélectivité est exprimée en rapport normalisé des constantes de vitesse kHDS/kHDO, kHDO étant la constante de vitesse pour la réaction d'hydrogénation des oléfines (HDO), normalisée par volume de solide sous forme oxyde, en supposant un ordre 1 par rapport aux oléfines.
Les valeurs sont normalisées en prenant le catalyseur D comme référence et en prenant kHDS/kHDO=100 et kHDS=100.

| Catalyseur | % pds NiO | % pds MoO₃ | % pds CoO | k_{HDS} / k_{HDO} | k_{HDS} |
|---|---|---|---|---|---|
| D (référence) | - | 10,3 | 2,9 | 100 | 100 |

Les performances catalytiques des masses de captation en terme d'activité HDS et de sélectivité HDS/HDO normalisées par rapport au catalyseur D de référence sont données dans le tableau 4. La quantité d'arsenic captée par chaque solide a été rappelée.

**Tableau 4 : Performances des masses de captation sur charge modèle.**

| | %NiO | %MoO3 | %CoO | Activité en HDS normalisée | Sélectivité normalisée | %pds As capté |
|---|---|---|---|---|---|---|
| Masse de captation A (non conforme) | 18,5 | 0 | - | 21 | 406 | 12,1 |
| Masse de captation B (selon l'invention) | 18,2 | 2,1 | - | 57 | 169 | 14,8 |
| Masse de captation C (non conforme) | 7,7 | 7,4 | - | 108 | 88 | 10,2 |
| Catalyseur D (référence) | - | 10,3 | 2,9 | 100 | 100 | 2,1 |

La masse de captation A est nettement moins active que le catalyseur de référence D avec seulement 21% de son activité HDS. Elle est bien plus sélective que le catalyseur de référence D, la sélectivité étant multipliée par un facteur 4.
La masse de captation B est moins active que le catalyseur de référence D avec 57% de son activité HDS. Elle est par ailleurs plus sélective que le catalyseur D, avec 1,7 fois la sélectivité de référence. Ce solide conduit donc à un meilleur compromis entre captation de l'arsenic, activité en HDS et sélectivité HDS/HDO.
La masse de captation C est légèrement plus active que le catalyseur de référence D avec 108% de son activité HDS. Elle est moins sélective que le catalyseur de référence D, sa sélectivité étant multipliée par un facteur 0,88.

## Revendications

1. Procédé en lit fixe de captation de l'arsenic et de désulfuration d'une fraction hydrocarbonée comprenant des oléfines, du soufre et de l'arsenic, ledit procédé comprenant une étape a) de mise en contact en présence d'hydrogène d'une masse de captation avec ladite fraction hydrocarbonée, ladite masse de captation comprenant:
- du molybdène sous forme sulfuré et du nickel sous forme sulfuré,
- au moins un support poreux sélectionné dans le groupe constitué par les alumines, la silice, les silices alumines, l'oxyde de titane, l'oxyde de magnésium,
la teneur en Nickel étant comprise entre 10 et 28% poids exprimé en % d'oxyde de Nickel sur la masse de captation avant sulfuration, la teneur en Molybdène étant comprise entre 0,3 et 2,1% poids exprimé en % d'oxyde de Molybdène sur la masse de captation avant sulfuration.

2. Procédé selon la revendication 1 comprenant une étape b) dans lequel l'effluent de l'étape a) est mise en contact avec un catalyseur sélectif d'hydrodésulfuration.

3. Procédé selon la revendication 1 ou 2 dans lequel la fraction hydrocarbonée est une essence de craquage catalytique contenant entre 5% et 60% poids d'oléfines, entre 50 ppm et 6000 ppm poids de soufre et entre 10 ppb et 1000 ppb poids d'arsenic.

4. Procédé selon l'une des revendications précédentes dans lequel ledit support poreux est sélectionné dans le groupe constitué par les alumines et les silices alumines.

5. Procédé selon l'une des revendications précédentes dans lequel la surface spécifique dudit support poreux est comprise entre 30 m²/gramme et 350 m²/gramme.

6. Procédé selon l'une des revendications précédentes dans lequel la masse de captation comprend du phosphore, la teneur en phosphore étant comprise entre 0,1 et 10 % poids exprimé en % d'oxyde de Phosphore sur la masse de captation avant sulfuration.

7. Procédé selon l'une des revendications 2 à 6 dans lequel le catalyseur sélectif d'hydrodésulfuration comprend un métal du groupe VIB, un métal du groupe VIII, au moins un support sélectionné dans le groupe constitué par les alumines, la silice, les silice-alumines, le carbure de silicium, les oxydes de titane seuls ou en mélange avec de l'alumine ou de la silice alumine, les oxydes de magnésium seuls ou en mélange avec de l'alumine ou de la silice alumine.

8. Procédé selon l'une des revendications 1 à 7 dans lequel dans l'étape a), le rapport entre le débit d'hydrogène et le débit de la fraction hydrocarbonée est compris entre 50 et 800 Nm³/m³, la température opératoire est comprise entre 200 °C et 400 °C, la pression opératoire est comprise entre 0,2 et 5 MPa

9. Procédé selon l'une des revendications 1 à 7 dans lequel dans l'étape a), le rapport entre le débit d'hydrogène et le débit de la fraction hydrocarbonée est compris entre 100 et 600 Nm³/m³, la température opératoire est comprise entre 240 °C et 350 °C et la pression opératoire est comprise entre 0,5 et 3 MPa.

10. Procédé selon l'une des revendications 2 à 9 dans lequel l'étape b) est réalisée lorsque l'effluent de l'étape a) présente une teneur en soufre supérieure à 10 ppm.
